(19) Europäisches Patentamt

European Patent Office

Office européen des brevets

(11) **EP 1 679 835 A1**

(12) **EUROPEAN PATENT APPLICATION**

(43) Date of publication:
**12.07.2006 Bulletin 2006/28**

(51) Int Cl.:
*H04L 12/56* (2006.01)    *H04L 29/06* (2006.01)

(21) Application number: **05075029.8**

(22) Date of filing: **07.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Koninklijke KPN N.V.**
**2516 CK The Hague (NL)**

(72) Inventors:
• **Beerends, John Gerard**
**4585 PG Hengstdijk (NL)**

• **Venemans, Pieter Hendrik Albert**
**2624 DC Delft (NL)**
• **Rakoczi, Balint**
**2611 EH Delft (NL)**

(74) Representative: **Wuyts, Koenraad Maria et al**
**Koninklijke KPN N.V.,**
**Intellectual Property Group,**
**P.O. Box 95321**
**2509 CH Den Haag (NL)**

(54) **Method, device and system for predicting a data session time**

(57) A method of predicting a session time of a service between a source and a destination in a communications network (1) comprises the steps of sending a series of data packets from the source to the destination with a substantially increasing data rate, measuring the time delay of at least one selected data packet, and predicting the session time of the service on the basis of the time delay of the at least one selected data packet. The data rate may be increased by decreasing the time intervals between the data packets. A device (10; S, R) for carrying out the method may either be portable or integrated in a telecommunications system.

FIG. 1

EP 1 679 835 A1

## Description

### Field of the invention

The present invention relates to data session time prediction. More in particular, the present invention relates to a method and a device for predicting the session time of data in a communication network.

### Background of the invention

Modem communication networks offer a variety of data services, for example file transfers between consumer terminals, internet downloads, and browsing. The transmission and/or session times involved may depend on the type of service, the amount of data to be transmitted, and other factors, including network characteristics. As network operators want to offer the best possible service, network characteristics should be adapted so as to minimize session times. A session time is meant to refer to the time duration of a data session as perceived by the user.

Typical modem (tele)communication networks, such as UMTS (Universal Mobile Telecommunications System) networks, provide variable data transmission rates. A mechanism called "bearer switching" increases the transmission rate stepwise from 64 kpbs (kilobit per second) via 128 kbps to 384 kbps. As each rate increase is only effected after a delay of typically a few seconds, the overall session times are difficult to predict and may depend on the exact switching characteristics and details of the data sessions (for example browsing or downloading). However, if the service level is to be monitored, a reliable indication of typical transmission and/or session times is required.

### Aim of the invention

It is an object of the present invention to overcome these and other problems of the Prior Art and to provide a relatively simple method and device for predicting session times in communication networks which take into account variable network bit rate switching mechanisms, buffering characteristics, data loss, and/or other factors.

### Summary of the invention

Accordingly, the present invention provides a method of predicting a session time of a service between a source and a destination in a communication network, the method comprising the steps of:

- sending a series of data packets from the source to the destination with a substantially increasing data rate,
- measuring the time delay of at least one selected data packet, and

- predicting the session time of the service on the basis of the time delay of the at least one selected data packet.

By sending data packets with a substantially increasing data rate, the source data rate (number of bits per second) is effectively increased, thus triggering any mechanisms which provide increased transmission rates, such as "bearer switching" in UMTS. By then measuring the time delay of a selected data packet, a reliable prediction of the overall session time of the service may be obtained, based upon a minimum of measurements. More in particular, a single measurement may be sufficient to predict the transmission time of various file sizes for downloads and/or the session times of various types of data sessions (for example browsing sessions).

The time delay of a selected data packet, or of only a few selected data packets, proves to be a reliable predictor of the overall session time of a service offered over a network.

Increasing the data rate may be accomplished by decreasing the time intervals between the data packets of the series. Not all time intervals between the data packets need to be different. It is sufficient that the time intervals at the end of the series of data packets are shorter (that is, have a smaller duration) than at the beginning, so as to produce an increased sending data rate. It is preferred that the final sending data rate, that is the sending data rate at the end of the series, is high enough to trigger the highest possible transmission rate available in the network for the particular type of service.

In addition, the number of data packets having a certain time interval preferably increases. That is, there are preferably more time intervals having a specific duration as the duration decreases. This also contributes to an increasing data rate.

It is further preferred that the data packets of the series have substantially increasing sizes. This causes a further increase in the sending data rate, thus further testing the properties of the network. It is particularly preferred that the total amount of data is capable of filling all buffers of the data link concerned.

The protocol used for transmitting the series of data packets mentioned above is preferably different from the protocol used for transmitting regular data. More in particular, the protocol used in the method of the present invention is preferably a relatively simple protocol that allows data loss, for example UDP ("User Datagram Protocol"). It has been found that UDP or its equivalents are particularly suitable as any packet loss typically indicates that the limits of the transmission rates have been reached.

The selected packet used for predicting the session time of data may depend on the type of service and/or the type of data packet. In many types of service, the selected data packet is the last data packet received. In case data packets are lost, the time delay of the selected data packet can be estimated by extrapolation or other suitable techniques.

The time delay is preferably measured relative to the first data packet received. By measuring this relative (that is, differential) delay, any synchronisation between sending and receiving sides may be omitted, as the moment in time of sending the first data packet is no longer relevant. For some data services the time delay relative to the second data packet may be a suitable predictor, while for other data services the third data packet may be used as a reference.

The method of the present invention may further comprise the step of determining a round trip delay. This delay is measured by sending one or more data packets and waiting for these packets to be returned by the receiving side. Such a round trip delay provides further information on the network and, together with the relative delay measured in the way indicated above, provides a full characterisation of the transmission link, thus allowing a tuning of network and/or service parameters such as found e.g. in TCP stacks and UMTS networks. It is noted that the round trip delay includes both the (absolute) delay of the first data packet and the return delay and therefore better characterises delay times in the network than the (absolute) delay of the first data packet.

The series of data packets may be transmitted using any suitable protocol, for example TCP (Transmission Control Protocol). However, it is preferred that a simple, "lossy" protocol is used, such as UDP (User Datagram Protocol). The term "lossy" is meant to refer to the fact that data may be lost as the protocol provides no protection against data loss, in contrast to other ("lossless") protocols which may resend data that fail to arrive. Re-sending any lost data packets would influence the measured time delays and make the reliable prediction of session times more complicated. It is therefore preferred that the series of data packets is sent in accordance with a lossy protocol, preferably the UDP protocol. It has been found that the UDP protocol is particularly suitable, although other protocols may also be used. The data packets of the series may be provided with a suitable identifier, such as a sequence number, to allow detection of data loss.

It has been found that the loss of any data packets can easily be compensated by estimating their time delays on the basis of earlier data packets. The method of the present invention may therefore further comprise the step of estimating the time delay of any lost packets by extrapolation. The extrapolated time delays prove to provide a reliable estimation of transmission and/or session times.

Extrapolation is particularly suitable for estimating the time delays of lost data packets which are not followed by any received data packets. When data packets are received after one or more data packets are lost, in particular after a "gap" in the received data packets, other techniques may be used to compensate for the lost data packets. Although interpolation may be used, it is preferred that the delay time of a lost data packet is replaced with the delay time of the next received data packet.

The method according to any of the preceding claims, wherein the delay time of a lost data packet is replaced with the delay time of the next received data packet, the delay times of all data packets received after said lost data packets preferably being replaced with the delay time of each respective subsequent data packet. That is, the time delay of a lost data packet in a "gap" is replaced with the time delay of the next data packet received. Although in this way at least two identical time delay values may be used, it is further preferred that all subsequent time delay values are "shifted" to fill the "gap". This "shifting" may be effected by replacing the delay times of all data packets received after said lost data packets with the delay time of each respective subsequent data packet.

The present invention also provides a computer program product for carrying out the method as defined above. A computer program product may comprise a set of computer executable method steps stored on a suitable carrier, such as a CD, a DVD or a magnetic disc. The computer executable method steps may also be retrievable from a remote location, for example using the Internet. The computer executable method steps may be provided in a high-level computer language and/or may be converted into computer executable instructions.

The present invention additionally provides a device for predicting a session time of a service between a source and a destination in a communication network, the device comprising:

- means for sending a series of data packets from the source to the destination with a substantially increasing data rate,
- means for measuring the time delay of at least one selected data packet, and
- means for predicting the session time of the service on the basis of the time delay of the at least one selected data packet.

The device may be portable, so as to allow it to be used at various locations and/or in various networks. Alternatively, the device may be permanently installed in the network.

The present invention additionally provides a (tele)communication system, comprising a device as defined above. The telecommunications system of the present invention may comprise exchanges, transmission lines, billing apparatus, and other apparatus.

## Brief description of the drawings

The present invention will further be explained below with reference to exemplary embodiments illustrated in the accompanying drawings, in which:

Fig. 1 schematically shows a communications network in which the present invention may be utilized. Fig. 2 schematically shows a session time prediction device according to the present invention.
Fig. 3 schematically shows a series of data packets as used in the present invention.
Fig. 4 schematically illustrates an extrapolation technique used in the present invention.

## Detailed description of the invention

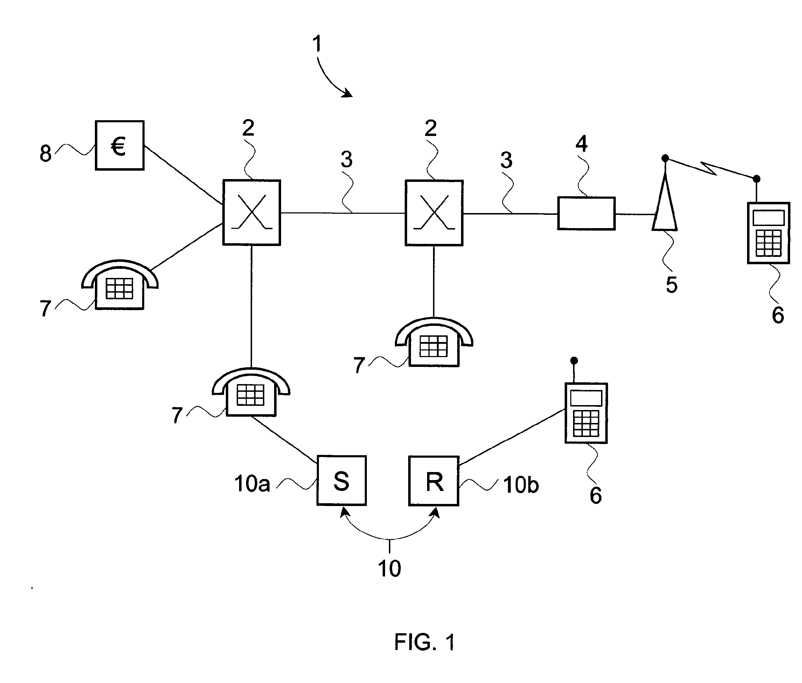

The communications network 1 shown merely by way of non-limiting example in Fig. 1 comprises exchanges 2, transmission lines 3, transceivers 4, antennas 5, mobile terminals 6, non-mobile terminals 7 and billing apparatus 8. The communications network also comprises a session time prediction device 10 according to the present invention.

The exemplary network 1 is designed for transmitting data in data packets. The actual data may include voice data, video data, control data and other data. The network 1 comprises parts for wireless communication, such as the transceivers 4 and antennas 5, which allow mobile (cellular) terminals 6 to communicate with other (mobile or non-mobile) terminals. The present invention is particularly advantageous in UMTS networks, but is not so limited and may also be used in, for example, GSM networks and other networks.

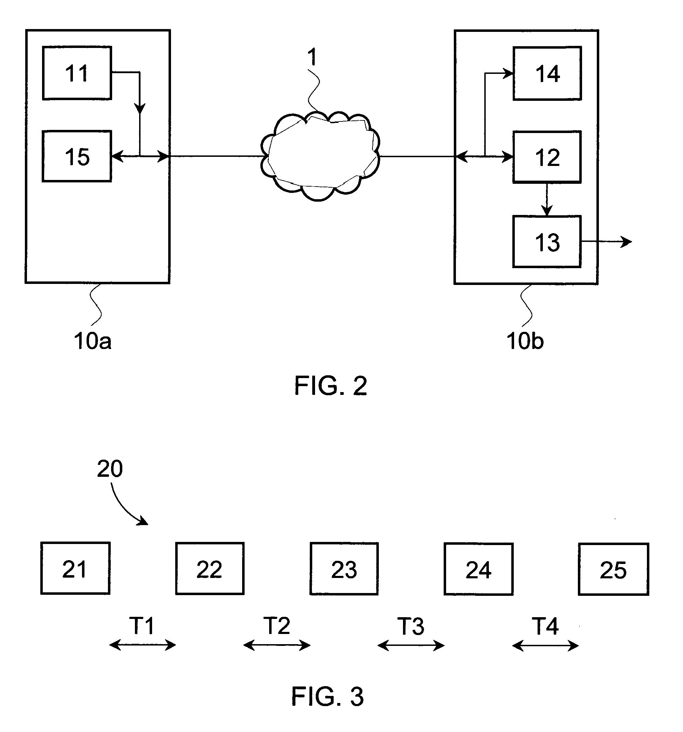

The exemplary device 10 of Fig. 2 comprises two parts: a sending (S) part 10a and a receiving (R) part 10b. The sending part 10a comprises a sending unit 11 for sending a series of data packets, and an auxiliary unit 15 for receiving data packets used in round trip measurements. The auxiliary unit 15 may contain a timer to measure the round trip delay.

The receiving part 10b of the device 10 comprises a measuring unit 12 for receiving selected data packets sent by the sending part 10a and measuring their respective time delays, a prediction unit 13 for predicting session times on the basis of the measured time delays, and a responding unit 14 for responding to any round trip measurement data packets received by the receiving part 10b.

It will be understood that the sending unit 11 and the auxiliary unit 15 of the sending part 10a may be combined into a single, integral unit, which in turn may be constituted by a microcomputer or similar device. It will further be understood that the measuring unit 12, the prediction unit 13 and the responding unit 14 may be also combined into a single, integral unit, which in turn may be constituted by a microcomputer or similar device. If a microcomputer or microprocessor is used, the units of the device may advantageously be constituted by software modules.

The device 10 of the present invention operates as follows. The sending part 10a and the receiving part 10b are connected to the network 1 at suitable locations, such as near or at end-points (that is, at data sending and receiving devices) of the services to be assessed.

The sending unit 11 of the sending part 10a produces a series of data packets and transmits these data packets over the network to the receiving part 10b, where they are received by the measuring unit 12. Of each data packet received by the measuring unit 12, the time of arrival may be determined by using a (local or global) clock. In a preferred embodiment, the time of arrival of all data packets is registered and typically two data packets per series are selected. The time delay is measured by determining the difference between the time of arrival of the last selected data packet (for example the 256th data packet) and the time of arrival of the first selected data packet (for example the 1st data packet). This time delay is fed to the prediction unit 13 which produces a prediction of a session time of a service in the network 1. If any of the selected data packets is lost, its time delay may be determined by extrapolation.

The data packets relative to which the time delays of one or more selected data packets are measured may depend on the service being predicted. For most data services, time delays may be measured relative to the first data packet of the series. In other words, the first data packet of the series serves as a reference data packet. However, for some services the second data packet may be used as a reference, while in other cases the third data packet may prove to yield the best results.

A data packet that may advantageously be selected for measuring its time delay is the last data packet. Accordingly, the (relative) time delay measured by the measuring unit 12 typically is the difference between the time of arrival of the last data packet and the time of arrival of the first data packet. However, this may depend on the service concerned, as mentioned above.

For example, for an FTP (File Transfer Protocol) download of 128 kbyte, the best predictor of the download time is the time delay of the last data packet (relative to the first data packet, as mentioned above). This is also the case for a 4000 kbyte FRP download. However, for a 4 kbyte FTP download the time delay of the 18th data packet relative to the 8th data packet may prove to yield the best prediction for a certain embodiment of the method or device and of the service to be assessed.

For an I-mode browse session (I-mode is a proprietary internet access service for mobile terminals, such as GSM and UMTS handsets), the time delay of the 36th data packet relative to the 33 data packet may prove to give the best prediction for a certain implementation of the service, while for a regular Internet browse session the last data packet (relative to the second) is the best predictor, as before.

The series of data packets is, in the preferred embodiment, transmitted using a "lossy" protocol, such as the well-known UDP (User Datagram Protocol). This means that it is not guaranteed that data packets arrive at their destination. In UDP, there is no mechanism for checking whether packets arrived or were lost. As a result, data packets will be lost if the sending rate (that is, the rate at which the data packets are sent by the sending part 10a) exceeds the maximum available transmission rate of the network and all buffers are filled.

However, the present invention is not hampered by the loss of data packets due to transmission rate limitations. Arrival times and the associated time delays of lost data packets may be estimated on the basis of extrapolation. That is, the arrival times and/or time delays of received data packets may be used to estimate the arrival times and/or time delays of lost data packets. It has been found that the prediction of the session time of the network is still reliable when estimates are used.

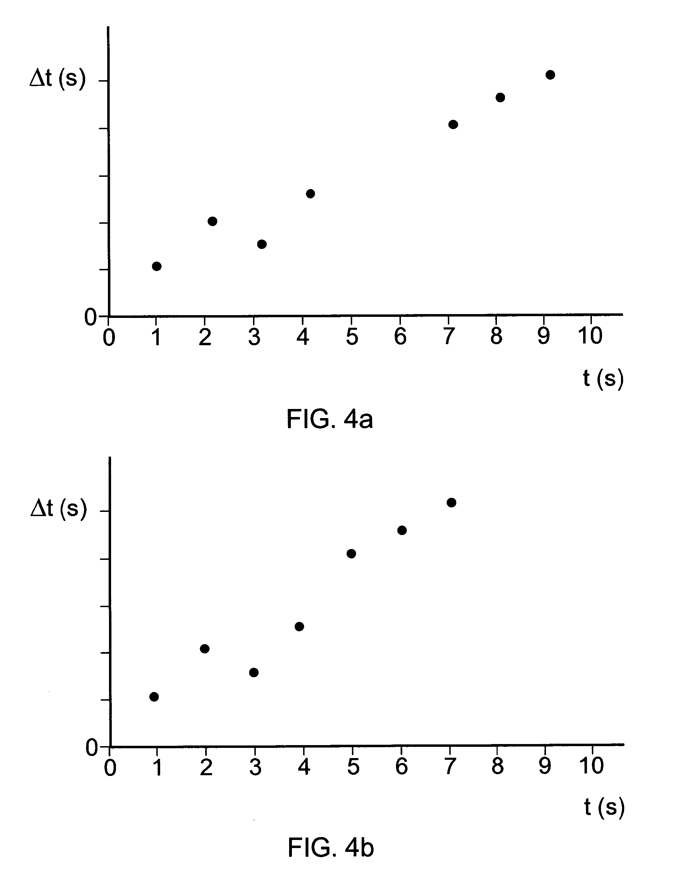

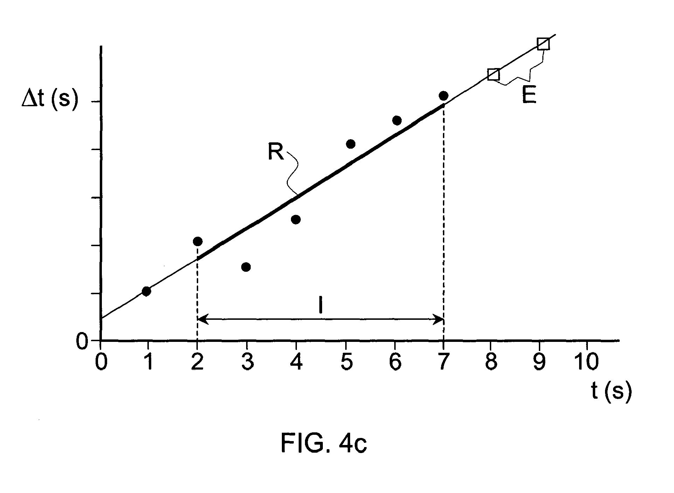

In the present invention, the arrival times of missing data packets are preferably estimated as follows. All data packets received are put in a sequence, in the order of their arrival (alternatively, they may be put in the order indicated by their identifiers, for example sequence numbers). This would normally leave some "gaps" where data packets are missing, but in preferred embodiments of the invention these "gaps" are ignored. This will effectively cause the data packets to be "shifted" so as to fill these gaps. This will later be explained in more detail with reference to Fig. 4.

It has been found that this estimation produces very good results while being very simple to implement. Alternatively, conventional interpolation techniques may be used to estimate the arrival times of any intermediate data packets so as to fill the gaps in the series of data packets.

Any "gaps" remaining after the last received data packet (for example when the 256th data packet is required for the prediction and only 243 data packets have been received) are filled using extrapolation of the arrival times of the received data packets. This extrapolation may be carried out using conventional methods, such as (linear) regression, which are well known. Preferably, only a limited set of received data packets is used for the interpolation, for example the last 10 or 20 received data packets, or the data packets received in a certain time interval.

The loss of data packets can be detected by tracking their identifiers, such as sequence numbers, and/or by counting the number of data packets received.

An exemplary series of data packets is schematically illustrated in Fig. 3. The series 20 consists of data packets 21, 22, 23, ... separated by time intervals T1, T2, ... respectively. The data packets each have a certain size (number of bits) and may contain a unique identification, such as an identification number (for example a sequence number). Each data packet may also contain a further unique identification which identifies the particular series of which the data packet is part. The total size of the series 20 may vary between approximately 50 and 500 data packets, although both smaller and larger series may also be used. A number of 200 to 300 data packets has been found to be particularly suitable.

It would be possible to use a series of data packets having constant time intervals or constant sizes, still resulting in an increasing data rate (number of bits per second). The increase of the data rate may then be achieved by either increasing the time interval between the data packets or increasing the packet size. In the present invention, however, it is preferred to increase the data rate over the series by increasing the packet size and decreasing the time intervals between the data packets as the series of data packets is transmitted. More in particular, it is preferred to start at a relatively low data rate and to increase the data rate so as to reach the highest available transmission rate of the network. In UMTS networks, the highest available transmission rate is reached when the highest bearer speed is triggered.

In a preferred embodiment, the packet size is increased from an initial 60 bytes (first or "start" data packet) via 500 bytes (second packet) to 1500 bytes (in other embodiments intermediate values, such as 150 bytes, may also be used).

As the packet size is increased, the time interval between the data packets is decreased. While the first and second intervals T1, T2 are 5 and 2 s (seconds) respectively in this preferred embodiment, the subsequent time intervals are reduced from 1 s to 25 ms, for example according to the following pattern: 1000, 500, 250, 125, 64, 32, and 16 ms. The number of data packets having a certain time interval also increases in preferred embodiments of the invention, as illustrated in the following table:

| Interval (ms) | Number of data packets |
|---|---|
| 5000 | 1 |
| 2000 | 1 |
| 1000 | 2 |
| 500 | 4 |
| 250 | 8 |
| 125 | 16 |
| 64 | 32 |
| 32 | 64 |
| 16 | 128 |

As the duration of the time intervals decreases, the number of time intervals having a certain duration increases in this embodiment.

It can thus be seen that two successive data packets may have identical sizes or identical time intervals, but that overall the data rate increases over the series. As a result of the increasing data rate, the maximum available transmission rate of the network may be reached, which may result in a loss of data packets as mentioned above. When such a loss of data packets is detected, the time delays of missing data packets may be estimated using extrapolation.

The time delays are converted into session times using a suitable mapping, for example using a look-up table. Such a look-up table is based on tests which established the relationships between measured time delays of data packets and actual measured session times of a network service. Instead of a look-up table, other mappings may be carried out, for example using (linear) regressions. A linear regression may produce a formula having the format

$$T = a.\Delta t + b$$

where T is the session time to be predicted, a is the slope of the regression line, $\Delta t$ is the measured differential time delay, and b is the offset of the regression line. Such a formula allows the session time T to be predicted once $\Delta t$ has been measured.

Various look-up tables and/or regression formulae may be established, each for a different network service. The exemplary regression coefficients a and b mentioned above will typically have different values for different network services. In the present invention, a single (relative) time delay measurement allows the session time T to be determined for a plurality of services. It is noted that for some services the same measured differential time delay $\Delta t$ can be used (for example the delay of the 256th data packet relative to the 1st data packet), while some services will require another differential time delay $\Delta t$ (for example the delay of the 36th data packet relative to the 33rd data packet).

The interpolation and/or extrapolation used in preferred embodiments of the present invention is schematically illustrated in Fig. 4. In Fig. 4a, a set of delay ($\Delta t$) measurements is shown as a function of time (t). In the example of Fig. 4a, delays were measured (that is, data packets were received) at t = 1-4 and t = 7-9, while no data packets were received at t = 5 and t = 6. In accordance with the present invention, the measured delay ($\Delta t$) values of t = 7-9 are then "shifted" to the left so as to fill the gap at t = 5-6. This is illustrated in Fig. 4b. As a result, no delay values are present at t = 8 and t = 9. These missing values are subsequently estimated (or "reconstructed") by extrapolation. In the present example, an extrapolation interval I ranging from t = 2 to t = 7 is chosen. In other words, the extrapolation is based on the delay values at t = 2-7, the value at t = 1 is not used here. The choice of the range of interpolation interval I may depend on the particular service being assessed, the measured delay ($\Delta t$) values and other factors.

Extrapolation may be carried out by determining a linear regression line R through the extrapolation interval I. As is well known, a linear regression line is the best "fit" through a number of points, minimising a distance criterion such as the least-squares criterion. The linear regression line R of the present example effectively produces estimated delay values E at t = 8 and t = 9, as schematically illustrated in Fig. 4c.

In addition to measuring and/or estimating (relative) delay times, it is further advantageous to measure the round trip delay of the network, in addition to the time (preferably relative) delays of selected data packets. To this end, the device 10 (as schematically illustrated in Fig. 2) is provided with a responding unit 14 and an auxiliary unit 15. The responding unit 14, which is located in the receiving part 10b, responds to the receipt of a round trip probing packet by re-sending the received packet or, alternatively, sending an acknowledgment packet. The auxiliary unit 15 receives this packet and determines the time delay between sending the initial packet and receiving the returned packet. This round trip delay time provides additional information on the network.

The device 10, or its constituent parts, may be portable. This offers the advantage of being able to use the device in different networks and in different parts of a single network. Additionally, or alternatively, the device 10 may be controlled remotely. Remote control, for example via the network or via an infra-red remote control device, removes the need for an operator to manually operate the device.

The method of the present invention may be summarized as predicting the session time of a network by measuring the time delay of one or more selected data packets. Accordingly, the method of the present invention may comprise the following steps:

- sending a series of data packets from the source to the destination with substantially decreasing time intervals and/or substantially increasing packet sizes so as to achieve an increasing data rate,
- measuring the time delay of at least one selected data packet, in particular relative to another selected data packet, such as the first or second packet of the series,
- (optionally) estimating the time delay of any lost data packets, and
- predicting the session time of the service on the basis of the time delay of the selected data packet(s).
  In addition, the series of data packets may be transmitted using a different protocol from the protocol used for regular data transmissions in the network. The present invention makes it possible to use a single time delay measurement to predict the session time of one or more network service to be assessed. More in particular, the present invention allows a single measurement of time delays to be used for predicting the session time of a plurality of network services.

Although examples have been discussed which referred to downloads and download times, the present invention is not so limited and may also be used to predict the session time of uploads and browse sessions.

The present invention is based upon the insight that an end-to-end measurement of time delays of selected data packets provides a simple yet reliable prediction of overall session times in a communication network. The present invention benefits from the further insight that a lossy protocol, such as UDP, is very suitable for this type of measurements.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

**Claims**

1. A method of predicting a session time of a service between a source and a destination in a communication network (1), the method comprising the steps of:

 • sending a series (20) of data packets from the source to the destination with a substantially increasing data rate,
 • measuring the time delay of at least one selected data packet, and
 • predicting the session time of the service on the basis of the time delay of the at least one selected data packet.

2. The method according to claim 1, wherein the data packets of the series have substantially increasing sizes.

3. The method according to claim 1 or 2, wherein the data packets of the series have substantially decreasing time intervals (T1, T2,...), and wherein preferably the number of data packets having a certain time interval increases.

4. The method according to claim 1, 2 or 3, wherein the selected data packet is the last data packet of the series.

5. The method according to any of the preceding claims, wherein the time delay is measured relative to the first data packet of the series.

6. The method according to any of the preceding claims, further comprising the step of determining a round trip delay.

7. The method according to any of the preceding claims, wherein the series of data packets is sent in accordance with a lossy protocol, preferably the UDP protocol.

8. The method according to any of the preceding claims, further comprising the step of estimating the time delay of any lost data packets by extrapolation.

9. The method according to any of the preceding claims, wherein the delay time of a lost data packet is replaced with the delay time of the next received data packet, the delay times of all data packets received after said lost data packets preferably being replaced with the delay time of each respective subsequent data packet.

10. A computer program product for carrying out the method according to any of claims 1-9.

11. A device (10) for predicting a session time of a service between a source and a destination in a communication network (1), the device comprising:

 • means (11) for sending a series of data packets from the source to the destination with a substantially increasing data rate,
 • means (12) for measuring the time delay of at least one selected data packet, and
 • means (13) for predicting the session time of the service on the basis of the time delay of the at least one selected data packet.

12. The device according to claim 11, wherein the means (11) for sending a series of data packets are arranged for sending data packets having substantially increasing sizes.

13. The device according to claim 11 or 12, wherein the means (11) for sending a series of data packets are arranged for sending data packets having substantially decreasing time intervals (T1, T2, ...), and wherein said means (11) are preferably further arranged for increasing the number of data packets having a certain time interval.

14. The device according to claim 11, 12 or 13, wherein the means (12) for measuring the time delay are arranged for selecting the last data packet of the series.

15. The device according to any of claims 11 to 14, wherein the means (12) for measuring the time delay are arranged for measuring the time delay relative to the first data packet of the series.

16. The device according to any of claims 11 to 15, further comprising means (14, 15) for determining a round trip delay.

17. The device according to any of claims 11 to 16, wherein the series of data packets is sent in accordance with a lossy protocol, preferably the UDP protocol.

18. The device according to any of claims 11 to 17, further comprising means for estimating the time delay of any lost packets by extrapolation.

19. The device according to any of claims 11 to 18, further comprising means for replacing the delay time of a lost data packet with the delay time of the next received data packet, said means preferably being arranged for replacing the delay times of all data packets received after said lost data packets with the delay time of each respective subsequent data packet.

20. A telecommunication system, comprising a device (10) according to any of claims 11-19.

FIG. 1

EP 1 679 835 A1

1

10a

**FIG. 2**

20

| 21 | | 22 | | 23 | | 24 | | 25 |

T1      T2      T3      T4

**FIG. 3**

FIG. 4a

FIG. 4b

FIG. 4c

**European Patent Office**

**EUROPEAN SEARCH REPORT**

Application Number

EP 05 07 5029

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 489 865 A (KONINKLIJKE KPN N.V) 22 December 2004 (2004-12-22) * abstract * * paragraph [0002] - paragraph [0021] * * paragraph [0023] - paragraph [0061] * * figures 1-4 * | 1-20 | H04L12/56 H04L29/06 |
| Y | EP 1 168 732 A (MITSUBISHI DENKI KABUSHIKI KAISHA) 2 January 2002 (2002-01-02) * abstract * * paragraph [0021] - paragraph [0040] * * paragraph [0045] - paragraph [0096] * | 1-20 | |
| A | US 2003/074379 A1 (KEOHANE SUSANN MARIE ET AL) 17 April 2003 (2003-04-17) * abstract * * paragraph [0004] - paragraph [0009] * * paragraph [0030] - paragraph [0039] * * figures 1-6 * | 1-20 | |
| A | US 2002/124080 A1 (LEIGHTON F. THOMSON ET AL) 5 September 2002 (2002-09-05) * abstract * * paragraph [0007] - paragraph [0012] * * paragraph [0033] - paragraph [0116] * * figures 1-7 * | 1-20 | **TECHNICAL FIELDS SEARCHED (Int.Cl.7)** H04L |

The present search report has been drawn up for all claims

| Place of search | Date of completion of the search | Examiner |
|---|---|---|
| Munich | 27 July 2005 | Körbler, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 07 5029

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2005

| Patent document cited in search report | | | Publication date | Patent family member(s) | | Publication date |
|---|---|---|---|---|---|---|
| EP 1489865 | A | | 22-12-2004 | EP 1489865 A1 | | 22-12-2004 |
| | | | | WO 2004114701 A2 | | 29-12-2004 |
| EP 1168732 | A | | 02-01-2002 | JP 2001230809 A | | 24-08-2001 |
| | | | | EP 1168732 A1 | | 02-01-2002 |
| | | | | CN 1363165 A ,C | | 07-08-2002 |
| | | | | WO 0161942 A1 | | 23-08-2001 |
| | | | | US 2002136164 A1 | | 26-09-2002 |
| US 2003074379 | A1 | | 17-04-2003 | NONE | | |
| US 2002124080 | A1 | | 05-09-2002 | NONE | | |

EPO FORM P0459

For more details about this annex : see Official Journal of the European Patent Office, No. 12/82